# EUROPÄISCHE PATENTSCHRIFT

(11) **EP 3 706 092 B1**
(45) Veröffentlichungstag und Bekanntmachung des Hinweises auf die Patenterteilung: **01.12.2021**
(21) Anmeldenummer: 20156791.4
(22) Anmeldetag: 12.02.2020
(51) Int. Cl.: G08C 17/00, G06F 3/0338, B60P 1/04, G08C 17/02, G06F 3/0482, B60P 1/64

(54) **KIPPFAHRZEUG MIT EINER BEDIENVORRICHTUNG**
DUMPER VEHICLE WITH A CONTROL DEVICE
VÉHICULE À BENNE AVEC UN DISPOSITIF DE COMMANDE

(30) Priorität: 04.03.2019 DE 102019202882
(43) Veröffentlichungstag der Anmeldung: 09.09.2020
(73) Patentinhaber: Franz Xaver Meiller Fahrzeug- und Maschinenfabrik - GmbH & Co KG, 80997 München (DE)
(72) Erfinder: STÜHLER, Horst, 80939 München (DE)
(74) Vertreter: Weickmann & Weickmann PartmbB

(56) Entgegenhaltungen:
- EP-A1- 2 803 604
- EP-A2- 1 795 997
- EP-A2- 1 950 351
- US-A1- 2013 097 668
- US-A1- 2014 102 799
- US-A1- 2016 202 721

## Beschreibung

Die vorliegende Erfindung betrifft einen Absetzkipper, Abrollkipper oder Dreiseitenkipper, umfassend eine Mehrzahl von Funktionseinheiten zum Ausführen von spezifischen Funktionen und eine fahrzeugseitige Steuereinheit sowie eine Bedienvorrichtung gemäß dem Oberbegriff des Anspruchs 1.

Zur Betätigung der spezifischen Funktionen von Nutzfahrzeugen, beispielsweise von Absetzkippern, ist es bekannt, geeignete Bedienvorrichtungen vorzusehen, die mit Steuereinheiten der Nutzfahrzeuge in Datenaustausch stehen und somit als Fernsteuerung für die einzelnen Funktionen wirken. Der Begriff der "Funktion" ist hierbei so zu verstehen, dass er den gesteuerten Betrieb von beliebigen Anbau- und Betriebskomponenten des Fahrzeugs umfassen kann.

Hierbei sind beispielsweise Fernsteuerungen bekannt, bei denen eine erste Funktion über ein Daumenrad bedient wird, während zur Steuerung einer zusätzlichen zweiten Funktion ein weiteres Bedienelement vorgesehen ist. Wenngleich derartige Bedienvorrichtungen für das sequentielle Ausführen der ersten und der zweiten Funktion durchaus geeignet sind, so treten in der Praxis Fälle auf, in denen ein Bediener der Bedienvorrichtung, beispielsweise um Zeit zu sparen, beide Funktionen gleichzeitig anweisen möchte. In diesem Fall muss er dann umständlich die beiden Bedienelemente gleichzeitig bedienen, beispielsweise indem er beide Hände zu Hilfe nimmt, was zu einer mühsamen und fehleranfälligen Bedienung führen kann.

Dokument EP 2 803 604 A1, welches als nächstliegender Stand der Technik erachtet wird, offenbart ein Abfallsammelfahrzeug, welches eine Bedienvorrichtung mit einer Mehrzahl von Funktionseinheiten zum Ausführen von spezifischen Funktionen umfasst, wobei an der Bedienvorrichtung über einen Zwei-Achsen-Joystick und ein Auswahlelement verschiedene spezifische Funktionen ausgewählt und ausgeführt werden können. Ferner sei auf die Dokumente EP 1 950 351 A2, EP 1 795 997 A2, US 2013/097668 A1, US 2014/102799 A1 und US 2016/202721 A1 hingewiesen.

Es ist somit die Aufgabe der vorliegenden Erfindung, eine Bedienvorrichtung für ein Nutzfahrzeug mit einer Mehrzahl von Funktionseinheiten zum Ausführen von spezifischen Funktionen bereitzustellen, die eine gleichzeitige Steuerung von zwei Funktionen des Nutzfahrzeugs in einer intuitiven und ergonomisch vorteilhaften Weise ermöglicht, wodurch bestimmte Arbeitsabläufe schneller und sicherer für den Bediener durchführbar werden.

Zu diesem Zweck wird ein erfindungsgemäßer Absetzkipper, Abrollkipper oder Dreiseitenkipper nach Anspruch 1 bereitgestellt.

Hierbei ist der Begriff des "Gehäuses" derart zu verstehen, dass die erfindungsgemäße Bedienvorrichtung nicht in das Fahrzeug selbst integriert ist, also keine fest verbaute Komponente darstellt, sondern als eigenständiges Bauteil ausgebildet ist, das in der Weise einer Fernsteuerung im Betrieb von dem Fahrzeug entfernt werden kann und mit diesem lediglich über eine kabelgebundene oder kabellose Datenverbindung kommuniziert.

Indem in der erfindungsgemäßen Bedienvorrichtung ein Zwei-Achsen-Joystick vorgesehen ist, dessen beide Achsen in der Mehrzahl von Betriebsarten jeweils unterschiedliche Funktionen des Nutzfahrzeugs steuern können, kann ein Benutzer der Bedienvorrichtung die beiden entsprechenden Funktionen einhändig und ggf. sogar mit lediglich einem Daumen in einer intuitiven Weise steuern. Hierdurch können Bedienfehler vermieden und Arbeitsabläufe beschleunigt werden, in denen das parallele Ausführen der beiden genannten Funktionen zulässig, möglich und vorteilhaft ist.

In einer Ausführungsform der vorliegenden Erfindung kann beispielsweise jeder der zur Verfügung stehenden Betriebsarten ein eigenes Auswahlelement zugeordnet sein, beispielsweise eine Drucktaste, mittels derer die entsprechende Betriebsart von einem Bediener ausgewählt werden kann. Erfindungsgemäß ist zur Bereitstellung der Mehrzahl von Betriebsarten die elektronische Steuereinheit dazu eingerichtet, diese Mehrzahl von Betriebsarten in einer Endloskette bereitzustellen, wobei bei einer Betätigung des Auswahlelements oder einem der Auswahlelemente die jeweils nächste Betriebsart ausgewählt wird. Hierbei ist der Begriff der "Endloskette" derart zu verstehen, dass die einzelnen Betriebsarten in einer festen Abfolge angeordnet sind, wobei bei einer Betätigung des Auswahlelements jeweils zu der nächsten Betriebsart in der Abfolge gesprungen wird und beim Erreichen des Endes der Abfolge und einer weiteren Betätigung des Auswahlelements wieder zu der ersten Betriebsart in der Abfolge übergegangen wird. Auf diese Weise kann ein Bediener der Bedienvorrichtung intuitiv die gewünschte Betriebsart mit der entsprechenden Belegung des Zwei-Achsen-Joysticks auswählen.

Um die Bedienbarkeit der erfindungsgemäßen Bedienvorrichtung in dieser Hinsicht weiter zu verbessern, können wenigstens zwei Auswahlelemente vorgesehen sein, wobei bei einer Betätigung von einem ersten der Auswahlelemente in der eben beschriebenen Weise die jeweils nächste Betriebsart in der Endloskette ausgewählt wird und bei einer Betätigung von einem zweiten der Auswahlelemente die jeweils vorhergehende Betriebsart ausgewählt wird. Durch das Vorsehen dieser beiden Auswahlelemente wird ein Durchlaufen der Endloskette in beiden Richtungen ermöglicht, was beispielsweise in Fällen vorteilhaft sein kann, in denen ein Bediener mehrfach zwischen zwei bestimmten Betriebsarten umzuschalten hat, wobei er dann jeweils durch entsprechendes Betätigen der beiden eben beschriebenen Auswahlelemente zwischen den gewünschten Betriebsarten vor- und zurückspringen kann und nicht jedes Mal die gesamte Endloskette zu durchlaufen hat, um zu seinem Ausganspunkt in der Endloskette zurückzukehren.

Wenngleich es prinzipiell ausreichend ist, an der Anzeigevorrichtung dem Bediener der Bedienvorrichtung lediglich Informationen über die momentan ausgewählte Betriebsart bereitzustellen, beispielsweise mit Hilfe von geeigneten Piktogrammen, die jeweils die beiden Funktionen repräsentieren, die den einzelnen Achsen des Zwei-Achsen-Joysticks in der momentanen Betriebsart zugeordnet sind, so kann es bei der Ausführungsform mit einer von der Steuereinheit bereitgestellten Endloskette von Betriebsarten vorteilhaft sein, wenn dem Benutzer zusätzlich Informationen über wenigstens eine nächste und ggf. wenigstens eine vorhergehende Betriebsart angezeigt werden, um beispielsweise Fälle zu vermeiden, in denen der Benutzer durch Unachtsamkeit ein Auswahlelement zu schnell bedient und eine gewünschte Betriebsart überspringt und somit entweder in der Endloskette zurückspringen oder sie gar ein ganzes Mal erneut durchlaufen muss.

Wenngleich die Anordnung der einzelnen Betriebsarten in der Endloskette zunächst einmal beliebig ist und beispielsweise auch statisch gewählt werden kann, so kann in einer Ausführungsform ebenfalls vorgesehen sein, dass die elektronische Steuereinheit ferner dazu eingerichtet ist, Verwendungsmuster der Bedienvorrichtung auszuwerten und auf Grundlage dieser Auswertung die Reihenfolge der Betriebsarten in der Endloskette anzupassen. Hierzu kann die Steuereinheit beliebige geeignete statistische und/oder algorithmische Verfahren anwenden, um das Benutzungsverhalten durch einen oder mehrere Benutzer der Bedienvorrichtung quantitativ und/oder qualitativ zu erfassen und zu bewerten.

Diese Weiterbildung der vorliegenden Erfindung kann beispielsweise dann vorteilhaft sein, wenn die Auswertung der Verwendungsmuster im laufenden Betrieb ergibt, dass besonders häufig zwischen zwei bestimmten aus der Mehrzahl von Betriebsarten umgeschaltet wird, so dass diese in der Endloskette nebeneinander platziert werden können, um in folgenden Bedienungsabläufen Zeit einzusparen. Ferner sind Fälle denkbar, in denen ausgewertet wird, wie häufig jede der Betriebsarten tatsächlich von einem Benutzer eingesetzt wird, so dass häufig eingesetzte Betriebsarten in einem ersten Abschnitt der Endloskette angeordnet werden und selten benutzte Betriebsarten in einem anderen Abschnitt der Endloskette, so dass auch hier die Anzahl der notwendigen Betätigungen des oder der Auswahlelemente verringert werden kann.

Erfindungsgemäß ist die elektronische Steuereinheit ebenfalls dazu eingerichtet, die Betriebsarten in der Endloskette derart einzureihen, dass Betriebsarten, welche in einer ihrer beiden Funktionen übereinstimmen, gruppiert sind. Derartige Gruppierungen können bereits werksseitig bei einer ersten Programmierung der elektronischen Steuereinheit vorgesehen werden. Hierdurch wird erreicht, dass auf einzelnen Abschnitten der Endloskette jeweils Betriebsarten nebeneinanderliegen, bei denen eine der beiden Achsen des Zwei-Achsen-Joysticks jeweils dieselbe Funktion des Nutzfahrzeugs steuert, während demzufolge lediglich die andere der beiden Achsen zwischen einzelnen Funktionen des Nutzfahrzeugs umschaltet. In einem Extremfall könnte die erfindungsgemäße Bedienvorrichtung sogar derart eingerichtet sein, dass eine der beiden Achsen stets mit derselben Funktion belegt ist, beispielsweise wenn in dem entsprechenden Nutzfahrzeug eine primäre Funktion vorgesehen ist, die dem Bediener stets zur Verfügung zu stehen hat, während lediglich die Belegung der zweiten Achse variabel ist.

Alternativ oder zusätzlich kann die elektronische Steuereinheit ferner derart eingerichtet sein, dass auf eine Eingabe hin aus der Mehrzahl von bereitstellbaren Betriebsarten lediglich eine Untermenge durch das wenigstens eine Auswahlelement auswählbar gemacht wird. Durch diese Maßnahme kann in einer ersten Variante die Bedienbarkeit der erfindungsgemäßen Bedienvorrichtung weiter verbessert werden, beispielsweise indem einem Benutzer ermöglicht wird, mittels wenigstens eines Untermengen-Auswahlelements, welches dazu betätigbar ist, eine Eingabe an die elektronische Steuereinheit zu bewirken, eine vorbestimmte Untermenge von bereitstellbaren Betriebsarten auszuwählen und somit die Anzahl von momentan zur Verfügung stehenden und auswählbaren Betriebsarten zu verringern, falls in der momentanen Arbeitssituation des Nutzfahrzeugs nur ein Teil der Funktionen des Fahrzeugs verwendet werden soll.

In einer anderen Variante, welche alleine oder gemeinsam mit der eben beschriebenen ersten Varianten in einer einzelnen Bedienvorrichtung zum Einsatz kommen könnte, kann insbesondere zur Vermeidung von Bedienfehlern die elektronische Steuereinheit ferner dazu eingerichtet sein, von wenigstens einer externen Komponente Eingaben zu erhalten, um eine Untermenge von bereitstellbaren Betriebsarten auswählbar zu machen. Hierbei könnte die externe Komponente beispielsweise dem Nutzfahrzeug selbst zugeordnet sein, so dass der elektronischen Steuereinheit der erfindungsgemäßen Bedienvorrichtung momentane Betriebsparameter des Nutzfahrzeugs übermittelt werden und auf dieser Grundlage dann beispielsweise einzelne Funktionen und somit Betriebsarten deaktiviert werden, deren Ausführen ein Sicherheitsrisiko zum momentanen Zeitpunkt darstellen würde oder die schlichtweg momentan nicht benötigt werden. Hierzu kann das Fahrzeug mit beliebigen geeigneten Sensoren versehen sein, die ihre Daten zum Bewerten von momentanen Betriebsparametern zur Verfügung stellen und beispielsweise auch die genannten Funktionseinheiten können derartige Daten liefern, mit denen dann insbesondere Fälle erfasst werden können, in denen der Betrieb und der momentane Zustand einer der Funktionseinheiten den Betrieb einer anderen der Funktionseinheit ausschließt.

In diesem Zusammenhang können die elektronische Steuereinheit und die Anzeigevorrichtung ferner dazu eingerichtet sein, derart zusammenzuwirken, dass darzustellende Informationen über Betriebsarten dahingehend angepasst werden, ob die entsprechenden Betriebsarten momentan auswählbar sind oder nicht. Beispiele für derartige Anpassungen der darzustellenden Informationen könnten derart ausgeführt sein, dass momentan nicht zur Verfügung stehende Betriebsarten ausgegraut werden oder in dem oben beschriebenen Ausführungsbeispiel einer Anzeige von benachbarten Betriebsarten in einer Endloskette gar nicht mehr dargestellt werden. Selbstverständlich könnten beispielsweise auch durchgestrichene Piktogramme angezeigt werden, wenn eine entsprechende Betriebsart momentan nicht verfügbar bzw. auswählbar ist, etc.

Wenngleich die erfindungsgemäße Bedienvorrichtung beispielsweise über ein Kabel mit einem Nutzfahrzeug verbindbar sein kann, so kann in einer besonders flexiblen Ausführungsform ferner eine Drahtlos-Kommunikationseinheit vorgesehen sein, welche betriebsmäßig mit der elektronischen Steuereinheit gekoppelt und dazu eingerichtet ist, die von der elektronischen Steuereinheit ausgegebenen Anweisungen drahtlos an eine dem Nutzfahrzeug zugeordnete Empfängereinheit zu übertragen, sowie gegebenenfalls ferner dazu eingerichtet sein kann, von dem Nutzfahrzeug betriebsbezogene Daten zu empfangen, beispielsweise die weiter oben beschriebenen momentanen Betriebsparameter zum Sperren und Freigeben von einzelnen Betriebsarten der Bedienvorrichtung. Durch das Vorsehen der drahtlosen Kommunikationsverbindung kann sich ein Benutzer der Bedienvorrichtung in beliebigen räumlichen Positionen hinsichtlich des Fahrzeugs während der Bedienung aufhalten, was für viele denkbare Arbeitsabläufe essentiell ist, da eine optische Kontrolle von verschiedenen Standpunkten aus zur korrekten Durchführung davon notwendig ist.

Für diese Art von drahtloser Kommunikation kann auf bekannte Kommunikationsstandards zurückgegriffen werden, wie beispielsweise Bluetooth. Sofern die Bedienvorrichtung drahtlos mit dem Nutzfahrzeug kommuniziert, sind selbstverständlich weitere Komponenten in der Bedienvorrichtung vorzusehen, beispielsweise ein Akkumulator und ein geeigneter Ladeanschluss, um eine Versorgung von Komponenten wie der Anzeigevorrichtung und der elektronischen Steuereinheit mit Energie im drahtlosen Betrieb sicherzustellen.

Zuletzt kann die erfindungsgemäße Bedienvorrichtung wenigstens eine Sensoreinheit umfassen, welche dazu eingerichtet ist, Erfassungsdaten an die elektronische Steuereinheit auszugeben, wobei die Steuereinheit ferner dazu eingerichtet ist, den Betrieb der Bedienvorrichtung auf Grundlage der von der wenigstens einen Sensoreinheit erhaltenen Erfassungsdaten anzupassen. Hierbei kann beispielsweise daran gedacht werden, dass mittels einer derartigen Sensoreinheit erfasst wird, ob sich die Bedienvorrichtung momentan in einer Ladestation befindet, wobei dann dementsprechend die Bedienvorrichtung lediglich bei einer Entnahme aus der Ladevorrichtung in Betrieb genommen wird, oder es kann ein Beschleunigungssensor vorgesehen werden, der beispielsweise bei einer Detektion eines Sturzes der Bedienvorrichtung diese sofort außer Betrieb nimmt, oder auch ein kapazitiver Sensor, mittels welchem festgestellt werden kann, dass die Bedienvorrichtung momentan von einem Bediener am Körper getragen wird, beispielsweise in eine Tasche in seiner Kleidung gesteckt ist, woraufhin zur Verhinderung von Fehlbedienungen die Bedienvorrichtung ebenfalls außer Betrieb genommen werden kann.

Die vorliegende Erfindung betrifft ein Absetzkipper, Abrollkipper, oder Dreiseitenkipper, umfassend eine Mehrzahl von Funktionseinheiten zum Ausführen von spezifischen Funktionen, wenigstens eine zur Steuerung der Funktionseinheiten eingerichtete fahrzeugseitige Steuereinheit und eine erfindungsgemäße Bedienvorrichtung, wobei die wenigstens eine fahrzeugseitige Steuereinheit und die Bedienvorrichtung für einen Datenaustausch eingerichtet sind.

Hierbei können Hardware-mäßig gleiche Bedienvorrichtungen für unterschiedliche Typen von Nutzfahrzeugen eingesetzt werden, da diese lediglich hinsichtlich ihrer Programmierung, beispielsweise betreffend die zur Verfügung stehenden Betriebsarten, auf das jeweilige Nutzfahrzeug anzupassen sind und demzufolge baugleiche Bedienvorrichtungen nicht an einen bestimmten Typ von Fahrzeug gebunden sind. Ferner können erfindungsgemäße Bedienvorrichtungen bereits bei Auslieferung von entsprechenden Nutzfahrzeugen zusammen mit diesen in Betrieb genommen werden oder es sind auch Anwendungsfälle denkbar, in denen die erfindungsgemäßen Bedienvorrichtungen als Nachrüstlösung für bereits in Betrieb genommene Nutzfahrzeuge vorgesehen werden. In solchen Fällen ist dann lediglich darauf zu achten, dass die von der elektronischen Steuereinheit der Bedienvorrichtung ausgegebenen Anweisungen für die dem Nutzfahrzeug zugeordneten Funktionseinheiten mit den bereits an dem Nutzfahrzeug zur Verfügung stehenden Steuereinheiten für die entsprechenden Funktionen kompatibel sind. Weitere Vorteile und Eigenschaften der vorliegenden Erfindung werden aus der nachfolgenden Beschreibung einer Ausführungsform deutlich, wenn diese gemeinsam mit den beiliegenden Figuren betrachtet wird. Diese zeigen im Einzelnen:
- Figur 1: eine schematische Vorderansicht einer erfindungsgemäßen Bedienvorrichtung;
- Figur 2: eine schematische Darstellung einer ersten Endloskette von Betriebsarten;
- Figur 3: eine schematische Darstellung einer zweiten Endloskette von Betriebsarten; und
- Figur 4: eine schematische Darstellung der Belegung des Zwei-AchsenJoysticks der Bedienvorrichtung aus Figur 1 mit zwei entsprechenden Funktionen.

Die erfindungsgemässe Bedienvorrichtung ist mit Absetzkippern, Abrollkippern, oder Dreiseitenkippern kombinierbar.

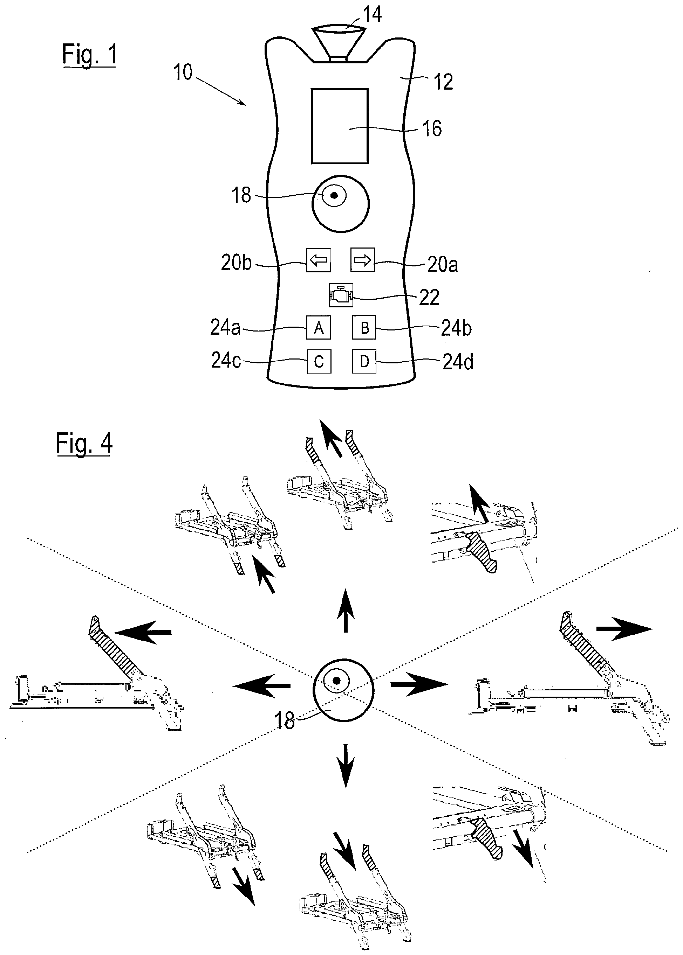

In Figur 1 ist nun zunächst einmal eine Ausführungsform einer erfindungsgemäßen Bedienvorrichtung in einer Draufsicht dargestellt und mit dem Bezugszeichen 10 bezeichnet. Die Bedienvorrichtung 10 umfasst ein beispielsweise wenigstens teilweise aus einem Kunststoff hergestelltes Gehäuse 12, das eine ergonomische Außenform aufweist und somit von einem Bediener der Bedienvorrichtung 10 mit einer Hand gut gegriffen und verwendet werden kann.

Die Bedienvorrichtung 10 ist kabellos ausgebildet, so dass sie mit einer fahrzeugseitigen Steuereinheit über ein drahtloses Kommunikationsprotokoll in Verbindung steht. Zu diesem Zweck sind in dem Gehäuse 12 neben weiteren nicht gezeigten internen Komponenten, wie beispielsweise einer elektronischen Steuereinheit und diversen Sensoreinheiten, ebenfalls eine Drahtlos-Kommunikationseinheit und ein Akkumulator vorgesehen. Dieser Akkumulator kann geladen werden, wenn die Bedienvorrichtung 10 in einer in dem nicht gezeigten Nutzfahrzeug vorgesehenen Ladestation eingesetzt wird, wobei ferner eine der Sensoreinheiten dazu eingerichtet ist, zu detektieren, ob sich die Bedienvorrichtung 10 momentan in der genannten Ladestation befindet, so dass lediglich bei einer Entnahme der Bedienvorrichtung 10 aus der Ladestation die Bedienvorrichtung 10 überhaupt in Betrieb genommen wird.

An der Oberseite des Gehäuses 12 der Bedienvorrichtung 10 befindet sich zunächst ein Not-Aus-Schalter 14, der bei einer Betätigung umgehend sämtliche relevanten Funktionen des zu steuernden Nutzfahrzeugs außer Betrieb nimmt und dementsprechend ein essentielles Bauteil zur Erfüllung von Sicherheitsvorschriften darstellt. Des Weiteren befindet sich in dem Gehäuse 12 eine Anzeigevorrichtung 16, beispielsweise ein LCD-Bildschirm, auf dem einem Benutzer der Bedienvorrichtung 10 visuell Informationen wenigstens über eine momentan ausgewählte Betriebsart zur Verfügung gestellt werden und ggf. weitere Informationen, wie beispielsweise der momentane Ladezustand des Akkumulators, etc.

Unterhalb der Anzeigevorrichtung 16 befindet sich ein Zwei-Achsen-Joystick 18, der von einem Bediener der Bedienvorrichtung 10 mit dem rechten oder linken Daumen bedient werden kann, wenn er die Bedienvorrichtung 10 in der vorgesehenen Weise hält. Der Zwei-Achsen-Joystick 18 erlaubt die gleichzeitige Steuerung von zwei getrennten Funktionen des betreffenden Nutzfahrzeugs, wobei jeder der beiden Achsen des Joysticks 18 eine der beiden Funktionen zugeordnet ist. Hierzu ist der Zwei-Achsen-Joystick 18 zweidimensional entlang der entsprechenden Achse frei schwenkbar.

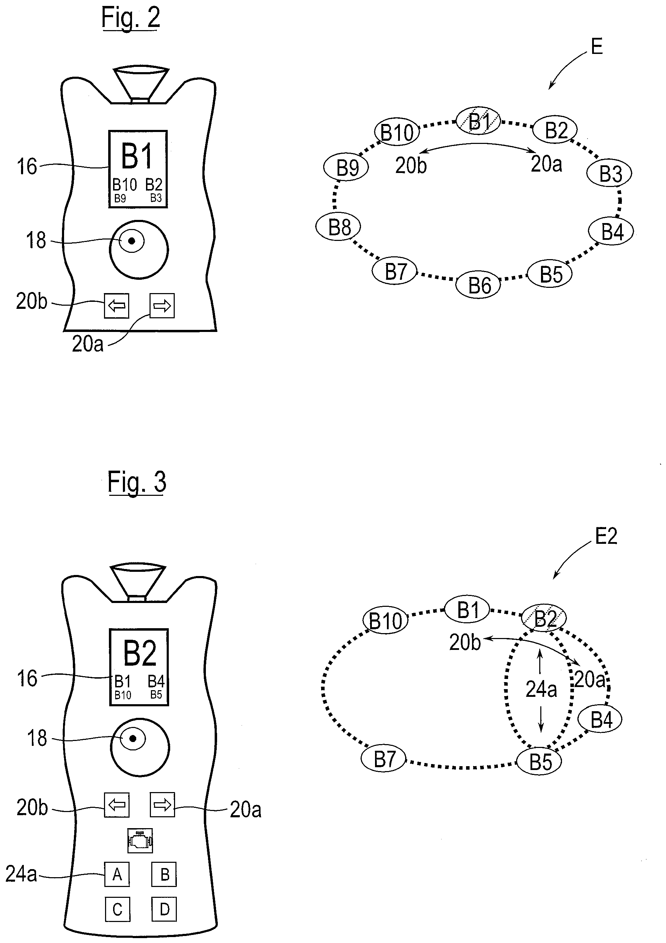

Wiederum unterhalb des Zwei-Achsen-Joysticks 18 sind zwei Drucktasten 20a und 20b vorgesehen, die an ihrer Oberseite mit Pfeilen gekennzeichnet sind und die die Funktionen der erfindungsgemäßen Auswahlelemente erfüllen. Mit Hilfe dieser ersten und zweiten Auswahlelemente 20a und 20b kann der Bediener durch die Mehrzahl von zur Verfügung stehenden Betriebsarten schalten, die von der Steuereinheit in einer Endloskette bereitgestellt werden, wobei bei einer Betätigung der Taste 20a jeweils die nächste Betriebsart in der Endloskette ausgewählt wird und bei einer Betätigung der Taste 20b jeweils die vorhergehende Betriebsart ausgewählt wird. Diese Funktionsweise wird weiter unten noch einmal im Zusammenhang mit den Figuren 2 und 3 detailliert erläutert werden.

Wiederum unterhalb der Auswahlelemente 20a und 20b befindet sich eine weitere Drucktaste 22, mit der ein Motor des Nutzfahrzeugs in Betrieb genommen werden kann, der beispielsweise eine Hydraulikpumpe antreibt, die die einzelnen Funktionseinheiten zum Ausführen von spezifischen Funktionen mit Energie versorgt.

Zuletzt finden sich im unteren Bereich der Bedienvorrichtung 10 vier weitere Drucktasten 24a bis 24d, die die Funktion von erfindungsgemäßen Untermengen-Auswahlelementen erfüllen, und die dementsprechend dazu betätigbar sind, eine Eingabe an die elektronische Steuereinheit zu bewirken, um eine vorbestimmte Untermenge von bereitstellbaren Betriebsarten auszuwählen. Die Untermengen-Auswahlelemente 24a bis 24d erlauben es einem Benutzer, die Menge der momentan auswählbaren Betriebsarten einzuschränken, beispielsweise kann eine Betätigung des ersten Untermengen-Auswahlelements 24a dafür sorgen, dass lediglich Funktionen im Zusammenhang mit Stützfüßen des Nutzfahrzeugs auswählbar sind, eine Betätigung des zweiten Untermengen-Auswahlelements 24b kann lediglich Funktionen im Zusammenhang mit einem Kippen eines Behälters des Nutzfahrzeugs zur Verfügung stellen, eine Betätigung des dritten Untermengen-Auswahlelements 24c kann lediglich Funktionen im Zusammenhang mit dem Sichern eines Behälters zur Verfügung stellen und eine Betätigung des vierten Untermengen-Auswahlelements 24d kann lediglich Funktionen im Zusammenhang mit Folgesteuerungen bereitstellen. Weitere Details zur Funktionsweise und Bedienung der Untermengen-Auswahlelemente 24a bis 24d werden weiter unten im Zusammenhang mit der Beschreibung von Figur 3 gegeben.

Zunächst einmal sei jedoch unter Bezugnahme auf Figur 2 die in der Bedienvorrichtung 10 aus Figur 1 von der elektronischen Steuereinheit zur Verfügung gestellte Endloskette E von Betriebsarten B1 bis B10 beschrieben, wobei sich in der gezeigten Ausführungsform die Betriebsarten B1 bis B10 lediglich in der Belegung der Y-Achse des Zwei-Achsen-Joysticks 18 unterscheiden und die X-Achse stets mit derselben Funktion belegt ist, beispielsweise dem in Figur 4 dargestellten Ein- bzw. Ausschwenken eines Hauptauslegers des Absetzkippers aus dem hier diskutierten Beispiel.

Dementsprechend ist in der ebenfalls in Figur 2 dargestellten Darstellung der Anzeigevorrichtung 16 jeweils lediglich ein Piktogramm (aus Gründen der Übersichtlichkeit durch den Text "B1" ersetzt) gezeigt, welches die momentane Belegung der Y-Achse des Zwei-Achsen-Joysticks 18 wiedergibt, sowie kleinere Piktogramme (hier "B2" und "B3"), die jeweils die nächsten beiden folgenden Betriebsarten der Endloskette darstellen, sowie die beiden vorhergehenden Betriebsarten der Endloskette (hier"B10" und "B9"). Es versteht sich, dass in anderen Ausführungsformen der erfindungsgemäßen Bedienvorrichtung Betriebsarten vorgesehen sein können, in denen ebenfalls die Belegung der X-Achse des Zwei-Achsen-Joysticks 18 variabel ist, wobei in einem solchen Fall dann die Darstellung von Piktogrammen an der Anzeigevorrichtung 16 derart angepasst werden sollte, dass die Belegung beider Achsen des Joysticks 18 der momentan ausgewählten Betriebsart dargestellt wird.

In der in Figur 2 gezeigten Ausführungsform ist es jedoch so, dass sich die dargestellte Endloskette E dementsprechend lediglich auf die Belegung der Y-Achse des Zwei-Achsen-Joysticks 18 bezieht, die mit zehn verschiedenen Funktionen belegt sein kann. Diese Funktionen können durch Betätigung der beiden oben bereits beschriebenen Auswahlelemente 20a und 20b angewählt werden, wie durch den Doppelpfeil in Figur 2 dargestellt, wobei eine Betätigung der beiden Auswahlelemente 20a bzw. 20b jeweils zu einem Schritt nach rechts bzw. links in der Endloskette führt. Die Reihenfolge der einzelnen Betriebsarten B1 bis B10 in der Endloskette kann hierbei entweder fest eingestellt sein oder variabel änderbar sein, beispielsweise kann die elektronische Steuereinheit Verwendungsmuster der Bedienvorrichtung 10 analysieren und auf Grundlage dieser Analyse die Positionierungen der einzelnen Betriebsarten B1 bis B10 in der Endloskette E dynamisch anpassen, um eine Optimierung der Bedienbarkeit der Bedienvorrichtung 10 zu erreichen.

Figur 3 zeigt nun schematisch das Funktionsprinzip des Untermengen-Auswahlelements 24a, wobei die weiteren Untermengen-Auswahlelemente 24b bis 24d in einer ähnlichen Weise arbeiten. Bei der der Figur 3 zugrundeliegenden einmaligen Betätigung der Taste 24a wird von der elektronischen Steuereinheit der Bedienvorrichtung 10 ein Übergang von der in Figur 2 dargestellten Endloskette E zu der in Figur 3 dargestellten Endloskette E2 und dort insbesondere zu der Betriebsart B2 durchgeführt, wobei die Endloskette E2 im Vergleich zur Endloskette E weniger Elemente aufweist, d.h. weniger auswählbare Betriebsarten zur Verfügung stellt, in diesem Beispiel die Betriebsarten B1, B2, B4, B5, B7 und B10. Insbesondere wird durch einmaliges Drücken der Taste 24a lediglich ein Funktionskreis mit Funktionen der Y-Achse des Zwei-Achsen-Joysticks bereitgestellt, die sich auf Stützfüße bzw. Teleskope des Absetzkippers aus dem Beispiel beziehen und zwischen denen in der oben beschriebenen Weise erneut mit den Auswahlelementen 20a und 20b umgeschaltet werden kann, siehe erneut den Doppelpfeil in Figur 3.

Ferner ist in dem gezeigten Beispiel die elektronische Steuereinheit der Bedienvorrichtung 10 derart eingerichtet, dass bei einer weiteren Betätigung der Taste 24a lediglich zwischen zwei der Betriebsarten aus dem Funktionskreis in Figur 3 hin- und hergeschaltet wird, im gezeigten Beispiel zwischen den Betriebsarten B2 und B5. Somit kann der Bediener der Bedienvorrichtung 10 diese beiden besonders häufig verwendeten Betriebsarten B2 und B5 aus der verkleinerten Endloskette E2 aus Figur 3 komfortabel und schnell lediglich durch wiederholtes Drücken der Taste 24a auswählen. Um erneut zu der in Figur 2 gezeigten großen Endloskette E zurückzukehren, kann ein langes Drücken der Taste 24a vorgesehen sein, das von der elektronischen Steuereinheit der Bedienvorrichtung 10 dann dementsprechend interpretiert wird.

In einer nicht gezeigten Variante der erfindungsgemäßen Bedienvorrichtung 10 könnte diese ferner von Komponenten des Nutzfahrzeugs Daten erhalten, auf deren Grundlage einzelne Betriebsarten gesperrt werden können, beispielsweise wenn ein Durchführen dieser Betriebsarten im momentanen Zustand des Nutzfahrzeugs nicht sicher wäre, was ebenfalls in ähnlicher Weise zu einer verkleinerten Endloskette gegenüber der in Figur 2 gezeigten Endloskette E führen würde. In einem solchen Fall könnten die entsprechenden Funktionen in der Anzeigevorrichtung entweder gar nicht dargestellt werden, so dass sie bei einer Betätigung der Auswahlelemente 20a und 20b einfach übersprungen werden, oder sie könnten mit Hilfe von angepassten Piktogrammen dargestellt werden, beispielsweise indem diese ausgegraut oder durchgestrichen dargestellt werden.

In Figur 4 ist nun zuletzt schematisch die Funktionsweise des Zwei-Achsen-Joysticks 18 der erfindungsgemäßen Bedienvorrichtung 10 aus Figur 1 dargestellt, wenn die elektronische Steuereinheit der Bedienvorrichtung 10 in der in Figur 2 dargestellten Weise so konfiguriert ist, dass auf der X-Achse des Zwei-Achsen-Joysticks 18 jeweils eine Betätigung eines Hauptauslegers des beispielhaften Absetzkippers zum Ein- und Ausschwenken von diesem vorgesehen ist, während die Y-Achse des Zwei-Achsen-Joysticks 18 mit variablen Funktionen entsprechend der momentan ausgewählten Betriebsart belegt ist. Hierbei sind die einzelnen in Figur 4 dargestellten Funktionen, die entsprechend auf der Y-Achse des Zwei-Achsen-Joysticks 18 gelegt werden können, ein Ausfahren bzw. Einziehen von Stützfüßen, ein Ausfahren bzw. Einziehen von Teleskopen des Hauptauslegers und ein Schwenken von Kipphaken in beide Richtungen.

Es versteht sich, dass zahlreiche weitere Funktionen für die Y-Achse vorgesehen sein können, beispielsweise auch Folgesteuerungen, in denen eine Mehrzahl von Komponenten des Nutzfahrzeugs in einer vorbestimmten Weise zusammen oder nacheinander betrieben werden. Hierbei können die zur Verfügung stehenden Funktionen individuell auf das zu steuernde Nutzfahrzeug angepasst werden, während die in Figur 1 gezeigte Hardware universell verwendbar ist und lediglich eine entsprechende Programmierung der elektronischen Steuereinrichtung angepasst auf das jeweilige Nutzfahrzeug vorgesehen werden muss.

## Patentansprüche

1. Absetzkipper, Abrollkipper oder Dreiseitenkipper, umfassend eine Mehrzahl von Funktionseinheiten zum Ausführen von spezifischen Funktionen, wenigstens eine zur Steuerung der Funktionseinheiten eingerichtete fahrzeugseitige Steuereinheit und eine Bedienvorrichtung, wobei die wenigstens eine fahrzeugseitige Steuereinheit und die Bedienvorrichtung für einen Datenaustausch eingerichtet sind, wobei die Bedienvorrichtung umfasst:
- ein Gehäuse (12);
- eine in dem Gehäuse (12) aufgenommene elektronische Steuereinheit, welche dazu eingerichtet ist, eine Mehrzahl von Betriebsarten (B1 - B10) bereitzustellen und entsprechende Anweisungen für die dem Nutzfahrzeug zugeordneten Funktionseinheiten auszugeben, wobei in jeder der Betriebsarten zwei der Funktionen des Nutzfahrzeugs betätigbar sind;
- wenigstens eine an dem Gehäuse (12) angeordnete Anzeigevorrichtung (16), welche mit der elektronischen Steuereinheit gekoppelt und dazu eingerichtet ist, einem Benutzer visuell Informationen wenigstens über eine momentan ausgewählte Betriebsart (B1 - B10) zur Verfügung zu stellen, und
- eine Mehrzahl von Bedienelementen (20a, 20b, 22, 24a - 24d), wiederum umfassend:
∘ wenigstens ein Auswahlelement (20a, 20b), welches mit der elektronischen Steuereinheit betriebsmäßig gekoppelt und dazu betätigbar ist, die momentane Betriebsart (B1 - B10) auszuwählen, und
∘ einen Zwei-Achsen-Joystick (18), welcher ebenfalls mit der elektronischen Steuereinheit gekoppelt ist und mittels welchem die beiden Funktionen der momentan ausgewählten Betriebsart (B1 - B10) steuerbar sind, wobei jede der beiden Funktionen einer der beiden Achsen des Zwei-Achsen-Joysticks (18) zugeordnet ist,
**dadurch gekennzeichnet, dass** die elektronische Steuereinheit dazu eingerichtet ist, die Mehrzahl von Betriebsarten (B1 - B10) in einer Endloskette (E) bereitzustellen, wobei bei einer Betätigung des Auswahlelements (20a, 20b) oder eines der Auswahlelemente (20a, 20b) die jeweils nächste Betriebsart (B1 - B10) ausgewählt wird, und
dass die elektronische Steuereinheit dazu eingerichtet ist, die Betriebsarten (B1 - B10) in der Endloskette (E) derart einzureihen, dass Betriebsarten (B1 - B10), welche in einer ihrer beiden Funktionen übereinstimmen, derart gruppiert sind, dass auf einzelnen Abschnitten der Endloskette jeweils Betriebsarten nebeneinanderliegen, bei denen eine der beiden Achsen des Zwei-Achsen-Joysticks jeweils dieselbe Funktion des Nutzfahrzeugs steuert, während demzufolge lediglich die andere der beiden Achsen zwischen einzelnen Funktionen des Nutzfahrzeugs umschaltet.

2. Absetzkipper, Abrollkipper oder Dreiseitenkipper nach Anspruch 1,
wobei wenigstens zwei Auswahlelemente (20a, 20b) vorgesehen sind,
wobei bei einer Betätigung von einem ersten der Auswahlelemente (20a) die jeweils nächste Betriebsart (B1 - B10) ausgewählt wird und bei einer Betätigung von einem zweiten der Auswahlelemente (20b) die jeweils vorhergehende Betriebsart (B1 - B10) ausgewählt wird.

3. Absetzkipper, Abrollkipper oder Dreiseitenkipper nach Anspruch 1 oder 2,
wobei die elektronische Steuereinheit und die Anzeigevorrichtung (16) ferner dazu eingerichtet sind, dazu zusammenzuwirken, einem Benutzer zusätzlich Informationen über wenigstens eine nächste und ggf. wenigstens eine vorhergehende Betriebsart (B1 - B10) anzuzeigen.

4. Absetzkipper, Abrollkipper oder Dreiseitenkipper nach einem der Ansprüche 1 bis 3,
wobei die elektronische Steuereinheit ferner dazu eingerichtet ist, Verwendungsmuster der Bedienvorrichtung auszuwerten und auf Grundlage dieser Auswertung die Reihenfolge der Betriebsarten (B1 - B10) in der Endloskette (E) anzupassen.

5. Absetzkipper, Abrollkipper oder Dreiseitenkipper nach einem der vorhergehenden Ansprüche,
wobei die elektronische Steuereinheit ferner dazu eingerichtet ist, auf eine Eingabe hin aus der Mehrzahl von bereitstellbaren Betriebsarten (B1 - B10) lediglich eine Untermenge (E2) durch das wenigstens eine Auswahlelement (20a, 20b) auswählbar zu machen.

6. Absetzkipper, Abrollkipper oder Dreiseitenkipper nach Anspruch 5,
wobei die Bedienvorrichtung ferner wenigstens ein Untermengen-Auswahlelement (24a - 24d) umfasst, welches dazu betätigbar ist, eine Eingabe an die elektronische Steuereinheit zu bewirken, um eine vorbestimmte Untermenge (E2) von bereitstellbaren Betriebsarten (B1 - B10) auszuwählen.

7. Absetzkipper, Abrollkipper oder Dreiseitenkipper nach Anspruch 5 oder 6,
wobei die elektronische Steuereinheit ferner dazu eingerichtet ist, von wenigstens einer externen Komponente Eingaben zu erhalten, um eine Untermenge von bereitstellbaren Betriebsarten (B1 - B10) auswählbar zu machen.

8. Absetzkipper, Abrollkipper oder Dreiseitenkipper nach einem der Ansprüche 5 bis 7,
wobei die elektronische Steuereinheit und die Anzeigevorrichtung (16) dazu eingerichtet sind, derart zusammenzuwirken, dass darzustellende Informationen über Betriebsarten (B1 - B10) dahingehend angepasst werden, ob die entsprechenden Betriebsarten (B1 - B10) momentan auswählbar sind oder nicht.

9. Absetzkipper, Abrollkipper oder Dreiseitenkipper nach einem der vorhergehenden Ansprüche, wobei die Bedienvorrichtung ferner eine Drahtlos-Kommunikationseinheit umfasst, welche betriebsmäßig mit der elektronischen Steuereinheit gekoppelt und dazu eingerichtet ist, die von der elektronischen Steuereinheit ausgegebenen Anweisungen drahtlos an eine dem Nutzfahrzeug zugeordnete Empfängereinheit zu übertragen, sowie gegebenenfalls ferner dazu eingerichtet ist, von dem Nutzfahrzeug betriebsbezogene Daten zu empfangen.

10. Absetzkipper, Abrollkipper oder Dreiseitenkipper nach einem der vorhergehenden Ansprüche,
wobei die Bedienvorrichtung ferner wenigstens eine Sensoreinheit umfasst, welche dazu eingerichtet ist, Erfassungsdaten an die elektronische Steuereinheit auszugeben, wobei die Steuereinheit ferner dazu eingerichtet ist, den Betrieb der Bedienvorrichtung auf Grundlage der von der wenigstens einen Sensoreinheit erhaltenen Erfassungsdaten anzupassen.

## Claims

1. Skip loader, roll-off tipper or three-way tipper, comprising a plurality of functional units for executing specific functions, at least one vehicle-side control unit set up to control the functional units and an operating device, the at least one vehicle-side control unit and the operating device being set up for data exchange, the operating device comprising:
- a housing (12);
- an electronic control unit accommodated in the housing (12), which is set up to provide a plurality of operating modes (B1 - B10) and to output corresponding instructions for the functional units assigned to the utility vehicle, two of the functions of the utility vehicle being actuatable in each of the operating modes;
- at least one display device (16) arranged on the housing (12), which is coupled to the electronic control unit and is set up to provide a user with visual information about at least one currently selected operating mode (B1 - B10), and
- a plurality of operating elements (20a, 20b, 22, 24a - 24d), again comprising:
∘ at least one selection element (20a, 20b), which is operatively coupled to the electronic control unit and can be actuated to select the current operating mode (B1 - B10), and
∘ a two-axis joystick (18), which is also coupled to the electronic control unit and by means of which the two functions of the currently selected operating mode (B1 - B10) can be controlled, each of the two functions being assigned one of the two axes of the two-axis joysticks (18),
**characterised in that** the electronic control unit is set up to provide the plurality of operating modes (B1 - B10) in an endless chain (E), the next operating mode (B1 - B10) being selected when the selection element (20a, 20b) or one of the selection elements (20a, 20b) is actuated, and
**in that** the electronic control unit is set up to classify the operating modes (B1 - B10) in the endless chain (E) in such a way that operating modes (B1 - B10) which match in one of their two functions are grouped in such a way that on individual portions of the endless chain, operating modes are adjacent to each other in which one of the two axes of the two-axis joystick controls the same function of the utility vehicle in each case, while consequently only the other of the two axes switches between individual functions of the utility vehicle.

2. Skip loader, roll-off tipper or three-way tipper according to claim 1,
wherein at least two selection elements (20a, 20b) are provided, wherein the next operating mode (B1 - B10) is selected when a first of the selection elements (20a) is actuated and the previous operating mode (B1 - B10) is selected when a second of the selection elements (20b) is actuated.

3. Skip loader, roll-off tipper or three-way tipper according to either claim 1 or claim 2,
wherein the electronic control unit and the display device (16) are also set up to cooperate to additionally display information about at least one next and possibly at least one previous operating mode (B1 - B10) to a user.

4. Skip loader, roll-off tipper or three-way tipper according to any of claims 1 to 3,
wherein the electronic control unit is also set up to evaluate usage patterns of the operating device and, on the basis of this evaluation, to adapt the sequence of the operating modes (B1 - B10) in the endless chain (E).

5. Skip loader, roll-off tipper or three-way tipper according to any of the preceding claims,
wherein the electronic control unit is also set up to make only one subset (E2) selectable by the at least one selection element (20a, 20b) from the plurality of available operating modes (B1 - B10) in response to an input.

6. Skip loader, roll-off tipper or three-way tipper according to claim 5,
wherein the operating device also comprises at least one subset selection element (24a - 24d) which can be actuated to cause an input to the electronic control unit in order to select a predetermined subset (E2) of available operating modes (B1 - B10).

7. Skip loader, roll-off tipper or three-way tipper according to either claim 5 or claim 6,
wherein the electronic control unit is also set up to receive inputs from at least one external component in order to make a subset of available operating modes (B1 - B10) selectable.

8. Skip loader, roll-off tipper or three-way tipper according to any of claims 5 to 7,
wherein the electronic control unit and the display device (16) are set up to cooperate in such a way that information to be displayed about operating modes (B1 - B10) is adapted to determine whether the corresponding operating modes (B1 - B10) are currently selectable or not.

9. Skip loader, roll-off tipper or three-way tipper according to any of the preceding claims,
wherein the operating device also comprises a wireless communication unit, which is operatively coupled to the electronic control unit and is set up to wirelessly transmit the instructions output by the electronic control unit to a receiver unit assigned to the utility vehicle, and is optionally also set up to receive operational data from the utility vehicle.

10. Skip loader, roll-off tipper or three-way tipper according to any of the preceding claims,
wherein the operating device also comprises at least one sensor unit which is set up to output detection data to the electronic control unit, wherein the control unit is also set up to adapt the operation of the operating device on the basis of the detection data received from the at least one sensor unit.

## Revendications

1. Véhicule à benne basculante, ampliroll ou tri-benne basculante, comprenant une pluralité d'unités fonctionnelles pour réaliser des fonctions spécifiques, au moins une unité de commande côté véhicule configurée pour commander les unités fonctionnelles, et un dispositif d'actionnement, dans lequel ladite au moins une unité de commande côté véhicule et le dispositif d'actionnement sont configurés pour un échange de données, dans lequel le dispositif d'actionnement comprend :
- un boîtier (12) ;
- une unité de commande électronique logée dans le boîtier (12), qui est configurée pour fournir une pluralité de modes de fonctionnement (B1 - B10) et pour émettre des instructions correspondantes pour les unités fonctionnelles affectées au véhicule utilitaire, dans lequel dans chacun des modes de fonctionnement deux des fonctions du véhicule utilitaire peuvent être actionnées ;
- au moins un dispositif d'affichage (16) agencé sur le boîtier (12), lequel dispositif d'affichage (16) est couplé à l'unité de commande électronique et est configuré pour fournir visuellement des informations à un utilisateur au moins sur un mode de fonctionnement actuellement sélectionné (B1 - B10), et
- une pluralité d'éléments d'actionnement (20a, 20b, 22, 24a, 24d), comprenant:
∘ au moins un élément de sélection (20a, 20b) couplé de manière opérationnelle à l'unité de commande électronique et pouvant être actionné pour sélectionner le mode de fonctionnement actuel (B1 - B10), et
∘ un joystick à deux axes (18) qui est également couplé à l'unité de commande électronique et au moyen duquel les deux fonctions du mode de fonctionnement actuellement sélectionné (B1 - B10) peuvent être commandées, chacune des deux fonctions étant associée à l'un des deux axes du joystick à deux axes (18),
**caractérisé en ce que** l'unité de commande électronique est configurée pour fournir la pluralité de modes de fonctionnement (B1 - B10) dans une chaîne sans fin (E), le mode de fonctionnement suivant respectif (B1 - B10) étant sélectionné lorsque l'élément de sélection (20a, 20b) ou l'un des éléments de sélection (20a, 20b) est actionné, et
**en ce que** l'unité de commande électronique est configurée pour disposer les modes de fonctionnement (B1 - B10) dans la chaîne sans fin (E) de telle sorte que les modes de fonctionnement (B1 - B10) qui se correspondent dans l'une de leurs deux fonctions sont regroupés de telle sorte que des modes de fonctionnement dans lesquels l'un des deux axes du joystick à deux axes commande la même fonction du véhicule utilitaire sont situés les uns à côté des autres sur des sections individuelles de la chaîne sans fin, tandis que par conséquent seul l'autre des deux axes commute entre les fonctions individuelles du véhicule utilitaire.

2. Véhicule à benne basculante, ampliroll ou tri-benne basculante selon la revendication 1,
dans lequel au moins deux éléments de sélection (20a, 20b) sont prévus, dans lequel lors de l'actionnement d'un premier des éléments de sélection (20a) le mode de fonctionnement suivant respectif (B1 - B10) est sélectionné et lors de l'actionnement d'un deuxième des éléments de sélection (20b) le mode de fonctionnement précédent respectif (B1 - B10) est sélectionné.

3. Véhicule à benne basculante, ampliroll ou tri-benne basculante selon la revendication 1 ou 2,
dans lequel l'unité de commande électronique et le dispositif d'affichage (16) sont en outre configurés pour coopérer afin d'afficher en plus à un utilisateur des informations sur au moins un mode de fonctionnement suivant et éventuellement au moins un mode de fonctionnement précédent (B1 - B10).

4. Véhicule à benne basculante, ampliroll ou tri-benne basculante selon l'une quelconque des revendications 1 à 3,
dans lequel l'unité de commande électronique est en outre configurée pour évaluer les modèles d'utilisation du dispositif de commande et pour adapter la séquence des modes de fonctionnement (B1 - B10) dans la chaîne sans fin (E) sur la base de cette évaluation.

5. Véhicule à benne basculante, ampliroll ou tri-benne basculante selon l'une des revendications précédentes,
dans lequel l'unité de commande électronique est en outre configurée pour que seul un sous-ensemble (E2) de la pluralité de modes de fonctionnement (B1 - B10) disponibles puisse être sélectionné par ledit au moins un élément de sélection (20a, 20b) en réponse à une entrée.

6. Véhicule à benne basculante, ampliroll ou tri-benne basculante selon la revendication 5,
dans lequel en outre ledit dispositif d'actionnement comprend au moins un élément de sélection de sous-ensemble (24a-24d) pouvant être actionné pour provoquer une entrée dans ladite unité de commande électronique pour sélectionner un sous-ensemble prédéterminé (E2) de modes disponibles (B1-B10).

7. Véhicule à benne basculante, ampliroll ou tri-benne basculante selon la revendication 5 ou 6,
dans lequel l'unité de commande électronique est en outre configurée pour recevoir des entrées provenant d'au moins un composant externe pour rendre sélectionnable un sous-ensemble de modes de fonctionnement (B1 - B10) disponibles.

8. Véhicule à benne basculante, ampliroll ou tri-benne basculante selon l'une quelconque des revendications 5 à 7,
dans lequel l'unité de commande électronique et le dispositif d'affichage (16) sont configurés pour coopérer de telle sorte que les informations à afficher concernant les modes de fonctionnement (B1 - B10) sont configurées pour déterminer si les modes de fonctionnement correspondants (B1 - B10) sont actuellement sélectionnables ou non.

9. Véhicule à benne basculante, ampliroll ou tri-benne basculante selon l'une quelconque des revendications précédentes,
dans lequel le dispositif d'actionnement comprend en outre une unité de communication sans fil couplée de manière opérationnelle à l'unité de commande électronique et configurée pour transmettre sans fil les instructions émises par l'unité de commande électronique à une unité de réception associée au véhicule utilitaire, et éventuellement configurée en outre pour recevoir des données liées au fonctionnement du véhicule utilitaire.

10. Véhicule à benne basculante, ampliroll ou tri-benne basculante selon l'une quelconque des revendications précédentes,
dans lequel le dispositif de commande comprend en outre au moins une unité de capteur configurée pour délivrer des données de détection à l'unité de commande électronique, l'unité de commande étant en outre configurée pour ajuster le fonctionnement du dispositif d'actionnement sur la base des données de détection reçues dudit au moins une unité de capteur.
